# EUROPEAN PATENT APPLICATION

(11) **EP 3 869 289 A1**
(43) Date of publication of application: **25.08.2021**
(21) Application number: 19894680.8
(22) Date of filing: 17.10.2019
(51) Int. Cl.: G05D 1/02

(54) **METHOD AND CONTROL DEVICE FOR SETTING OPERATION ROUTE FOR OPERATION DEVICE**

(30) Priority: 14.12.2018 CN 201811531605
(71) Applicant: Guangzhou Xaircraft Technology Co., Ltd, Tianhe District Guangzhou, Guangdong 510000 (CN)
(72) Inventor: QIU, Yongheng, Guangzhou, Guangdong 510000 (CN); PENG, Bin, Guangzhou, Guangdong 510000 (CN)
(74) Representative: Dilg, Haeusler, Schindelmann Patentanwaltsgesellschaft mbH
(86) International application number: PCT/CN2019/111771
(87) International publication number: WO 2020/119247

(57) **Abstract**

Provided are a method and control device for setting an operation route for an operation device, belonging to the field of agricultural crop protection operations. The method comprises: displaying a map on a display interface, displaying target land plot information on the map, displaying a planned route for the target land plot on the map, and displaying a movable identifier on the map, the target land plot information comprising boundary information of the target land plot (S110); in response to a drag operation by a user on the movable identifier, changing the position at which the movable identifier remains (S120); according to the remain position, determining an operation route from the planned route (S130). On the map displayed by the display interface, the user can directly set the operation route by means of dragging the movable identifier, the entire human-computer interaction process is intuitive and convenient, and easy for the user to learn and operate.

## Description

### Cross-reference to Related Application

The present disclosure claims the priority to the Chinese patent application with the filing No. 201811531605.8, filed on December 14, 2018 with the Chinese Patent Office, and entitled "Method and Control Device for Setting Operation Route for Operation Device", the entirety of which is incorporated herein by reference.

### Technical Field

The present disclosure relates to the field of agricultural crop protection operations, and in particular, to a method and a control device for setting an operation route for an operation device.

### Background Art

In the current society, in order to improve the agricultural labor productivity, reduce the costs, and improve the economic benefits, the agriculture is gradually developed towards the direction of large-scale operation and mechanized operation. In the field of agricultural crop protection operations, the appearance of operation devices such as crop protection drone reduces the working strength of agricultural workers, and improves the spraying efficiency of crop protection liquid medicine such as pesticide and nutrient solution. Furthermore, using the operation devices such as crop protection drone to perform the pesticide spraying operation further can reduce the contact time of the agricultural workers with the pesticide, thus reducing the physical hazard of the pesticide to the agricultural workers.

Before the operation device performs the crop protection operation, land plots need to be allocated for the operation device, and a route for performing the crop protection operations is planned for the allocated land plot.

### Summary

In order to at least partially solve the above problems existing in the prior art, one of the objectives of the embodiments of the present disclosure is to provide a method and a control device for setting an operation route for an operation device.

In order to achieve the above objective, an embodiment of the present disclosure provides a method for setting an operation route for an operation device, wherein the method includes: displaying a map on a display interface, displaying target land plot information on the map, displaying a planned route for the target land plot on the map, and displaying a movable identifier on the map, wherein the target land plot information includes boundary information of the target land plot; changing a stay position of the movable identifier in response to a drag operation of a user on the movable identifier; and determining the operation route from the planned route according to the stay position.

Optionally, the step of changing a stay position of the movable identifier in response to a drag operation of a user on the movable identifier includes: controlling, in response to a selecting operation of the user on the movable identifier, the movable identifier to enter a movable state; controlling, in response to a moving operation of the user on the movable identifier entering the movable state, the movable identifier to move with the moving operation; and determining the stay position of the movable identifier in response to a stop operation of the user on the movable identifier entering the movable state.

Optionally, the planned route is provided with a plurality of positions to be segmented, and the step of determining the stay position of the movable identifier in response to a stop operation of the user on the movable identifier entering the movable state includes: determining a stop position of the movable identifier corresponding to the stop operation; determining the stay position according to the position to be segmented closest to the stop position of the movable identifier; and controlling the movable identifier to move to the stay position.

Optionally, the step of determining the operation route from the planned route according to the stay position includes: determining the operation route from the planned route according to a positional relationship between the stay position and the planned route.

Optionally, the planned route is provided with a plurality of positions to be segmented, and the step of determining the operation route from the planned route according to a positional relationship between the stay position and the planned route includes: selecting a position to be segmented closest to the stay position as the segmented position, and segmenting the planned route according to the segmented position so as to determine the operation route.

Optionally, the step of segmenting the planned route according to the segmented position so as to determine the operation route includes: taking a route between the segmented position and a start point of the planned route as the operation route; or taking a route between the segmented position and a terminal point of the planned route as the operation route.

Optionally, the movable identifier includes a start point movable identifier and a terminal point movable identifier, the segmented position includes a segmented start point position and a segmented terminal point position; and the step of segmenting the planned route according to the segmented position so as to determine the operation route includes: determining the segmented start point position according to the stay position of the start point movable identifier; determining the segmented terminal point position according to the stay position of the terminal point movable identifier; and taking the route located between the segmented start point position and the segmented terminal point position in the planned route as the operation route.

Optionally, the position to be segmented includes a start point position to be segmented corresponding to the start point movable identifier and a terminal point position to be segmented corresponding to the terminal point movable identifier; the step of determining the segmented start point position according to the stay position of the start point movable identifier includes: determining the segmented start point position from the start point position to be segmented according to the stay position of the start point movable identifier; and the step of determining the segmented terminal point position according to the stay position of the terminal point movable identifier includes: determining the segmented terminal point position from the terminal point position to be segmented according to the stay position of the terminal point movable identifier.

Optionally, the step of determining the operation route from the planned route according to a positional relationship between the stay position and the planned route includes: determining a target route covered by a movement track of the drag operation in the planned route according to the stay position; and segmenting the operation route from the planned route according to the target route.

Optionally, the method further includes: displaying at least one of a position of the operation device, a position of a drug filling machine, a position of a control device including the display interface, and a position of an obstacle on the map.

Optionally, the method further includes: displaying the planned route within a boundary indicated by the boundary information, wherein when the movable identifier is located at the stay position, the movable identifier at least partially overlaps the planned route.

In the other aspect, an embodiment of the present disclosure further provides a control device for setting an operation route for an operation device, wherein the control device includes a touch screen and a processor, the touch screen includes a display interface, and the processor is configured to: display a map on a display interface, and display target land plot information on the map, display a planned route for the target land plot on the map, and display a movable identifier on the map, wherein the target land plot information includes boundary information of the target land plot; change a stay position of the movable identifier in response to a drag operation of a user on the movable identifier; and determine the operation route from the planned route according to the stay position.

Optionally, the step that the processor changes the stay position of the movable identifier in response to the drag operation of the user on the movable identifier includes: controlling, in response to a selecting operation of the user on the movable identifier, the movable identifier to enter a movable state; controlling, in response to a moving operation of the user on the movable identifier entering the movable state, the movable identifier to move with the moving operation; and determining the stay position of the movable identifier in response to a stop operation of the user on the movable identifier entering the movable state.

Optionally, the planned route is provided with a plurality of positions to be segmented; and the step that the processor determines the stay position of the movable identifier in response to a stop operation of the user on the movable identifier entering the movable state includes: determining a stop position of the movable identifier corresponding to the stop operation; determining the stay position according to the position to be segmented closest to the stop position of the movable identifier; and controlling the movable identifier to move to the stay position.

Optionally, the processor is specifically configured to determine the operation route from the planned route according to a positional relationship between the stay position and the planned route.

Optionally, the planned route is provided with a plurality of positions to be segmented; and the step that the processor determines the operation route from the planned route according to a positional relationship between the stay position and the planned route includes: selecting a position to be segmented closest to the stay position as the segmented position, and segmenting the planned route according to the segmented position so as to determine the operation route.

Optionally, the step that the processor segments the planned route according to the segmented position so as to determine the operation route includes: taking a route between the segmented position and a start point of the planned route as the operation route; or taking a route between the segmented position and a terminal point of the planned route as the operation route.

Optionally, the movable identifier includes a start point movable identifier and a terminal point movable identifier, the segmented position includes a segmented start point position and a segmented terminal point position; and the step that the processor segments the planned route according to the segmented position so as to determine the operation route includes: determining the segmented start point position according to the stay position of the start point movable identifier; determining the segmented terminal point position according to the stay position of the terminal point movable identifier; and taking the route located between the segmented start point position and the segmented terminal point position in the planned route as the operation route.

Optionally, the position to be segmented includes a start point position to be segmented corresponding to the start point movable identifier and a terminal point position to be segmented corresponding to the terminal point movable identifier; the step that the processor determines the segmented start point position according to the stay position of the start point movable identifier includes: determining the segmented start point position from the start point position to be segmented according to the stay position of the start point movable identifier; and the step that the processor determines the segmented terminal point position according to the stay position of the terminal point movable identifier includes: determining the segmented terminal point position from the terminal point position to be segmented according to the stay position of the terminal point movable identifier.

Optionally, the step that the processor determines the operation route from the planned route according to a positional relationship between the stay position and the planned route includes: determining a target route covered by a movement track of the drag operation in the planned route according to the stay position; and segmenting the operation route from the planned route according to the target route.

Optionally, the processor is further configured to: display at least one of a position of the operation device, a position of a drug filling machine, a position of the control device including the display interface, and a position of an obstacle on the map.

Optionally, the processor is further configured to: display the planned route within the boundary indicated by the boundary information, wherein when the movable identifier is located at the stay position, the movable identifier at least partially overlaps the planned route.

Other features and advantages of the embodiments of the present disclosure will be illustrated in detail in following part of embodiments.

### Brief Description of Drawings

Accompanying drawings, constituting a portion of the description, are used to provide further understanding to the embodiments of the present disclosure, and are used to explain the embodiments of the present disclosure with the following specific implementations, rather than improperly limiting the present disclosure. In the accompanying drawings:
FIG. 1 exemplarily shows a flowchart of a method for setting an operation route for an operation device provided in an embodiment of the present disclosure;
FIG. 2 exemplarily shows a schematic view of a display interface provided in an embodiment of the present disclosure;
FIG. 3 exemplarily shows a flowchart of a method for setting an operation route for an operation device provided in an embodiment of the present disclosure;
FIG. 4 exemplarily shows a schematic view of another display interface provided in an embodiment of the present disclosure; and
FIG. 5 exemplarily shows a block diagram of a control device for setting an operation route for an operation device provided in an embodiment of the present disclosure.

Reference signs: 1-operation device; 2-target land plot; 3-movable identifier; 4-movable identifier; 5-route; 6-finger; 10-touch screen; 20-processor.

### Detailed Description of Embodiments

The specific embodiments of the present disclosure are described in detail below in combination with the accompanying drawings. It should be understood that the specific embodiments described herein are merely used to illustrate and explain the embodiments of the present disclosure, rather than being intended to limit the present disclosure.

In the embodiments of the present disclosure, unless otherwise stated, the terms of orientation such as "upper, lower, top, bottom, vertical, horizontal, left, and right" are generally used with respect to the directions shown in the drawings, and the target land plot, the planned route, and the operation route described in the embodiments of the present disclosure generally refer to identifiers displayed on the map corresponding to the target land plot, the planned route, and the operation route, respectively.

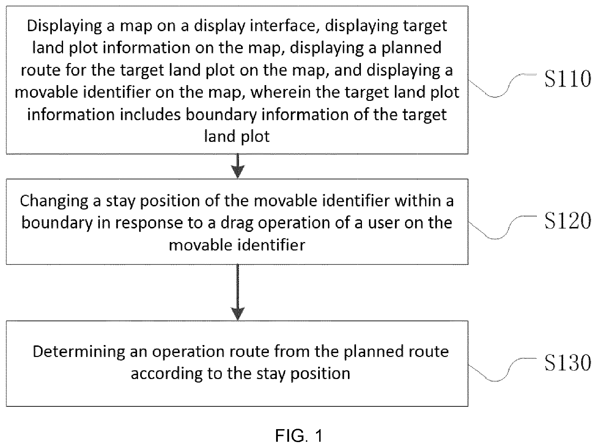

As shown in FIG. 1, the present embodiment provides a method for setting an operation route for an operation device, wherein the method may be executed by a control device, and the method includes:
step S110: displaying a map on a display interface, and displaying target land plot information, a planned route for the target land plot, and a movable identifier on the map, wherein the target land plot information includes boundary information of the target land plot;
step S120, changing a stay position of the movable identifier in response to a drag operation of a user on the movable identifier; and
step S130, determining an operation route from the planned route according to the stay position.

In this way, the user may directly set the operation route by dragging the movable identifier on the map displayed on the display interface, and the entire human-computer interaction process is intuitive and convenient, and easy for the user to learn and operate. Moreover, as the operation route may be directly set on the map, the user may take geographic information displayed on the map as a reference object for reference, so as to more clearly and accurately determine an actual geographic area corresponding to each section of route in the planned route, thereby facilitating the user in accurately setting the desired operation route for the operation device.

Optionally, in the present embodiment, the operation device may be, for example, a crop protection device (e.g., a drone, a driverless vehicle), and the target land plot may be a geographic area where the operation device needs to perform the crop protection operation, such as farmland or orchard. When the crop protection operation is required, the target land plot to be operated may be allocated for the operation device by a control device such as a handheld ground station or a mobile phone, and the operation route in which the operation device needs to perform the crop protection operation is set for the target land plot. The control device may include a display interface, and the user may operate on the display interface through a hand (for example, a palm, a finger) or a stylus. The control device may detect the operation of the user, and perform corresponding processing according to the operation of the user.

In the above, the control device may display the map on the display interface, and may display the target land plot information on the map, wherein the target land plot information may include boundary information of the target land plot, and the boundary information is configured to indicate a position of boundary of the target land plot on the map. For example, the boundary information of the target land plot may be a bounding box.

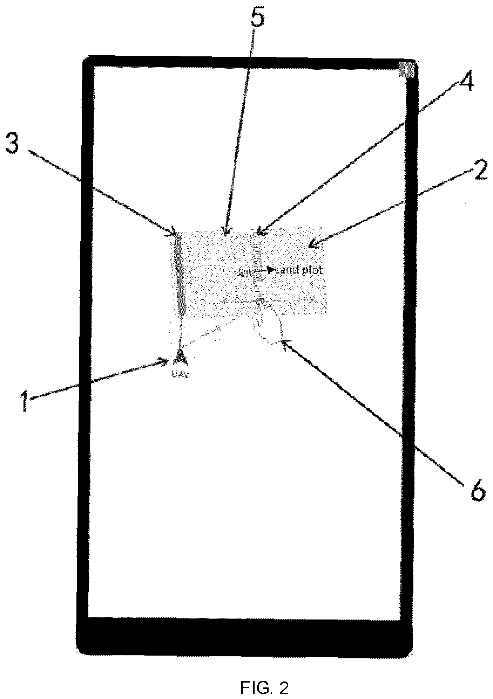

The planned route for the target land plot may be displayed within the boundary of the target land plot, and the planned route may be obtained by measuring the target land plot in real, for example, by a device having a positioning function, and when the operation device performs an operation according to the planned route, the crop protection operation for the whole target land plot generally can be completed. The planned route may be, for example, a serpentine route as shown in FIG. 2, which route may also be called as a "round-trip course", and based on which operation route the operation of traversing the land plot may be carried out.

In use, the operation device may not need to perform the crop protection operation on the whole target land plot, and therefore it is necessary to determine the operation route that needs to perform the crop protection operation from the planned route of the target land plot. Based on this, in an implementation of the present embodiment, the control device may further display the movable identifier on the map for the user to operate. An initial position of the movable identifier may be located at a position of the boundary of the target land plot displayed on the map, that is, the position indicated by the boundary information.

When the operation route needs to be set, the user may drag the movable identifier on the map, and the control device may change the stay position of the movable identifier within the boundary in response to the drag operation of the user on the movable identifier, and determine the operation route from the planned route according to the positional relationship between the stay position and the planned route.

In some embodiments, when an operation course section of the operation device such as drone is set, the user needs to open a course modification page to select an operation section for the operation device. The hierarchy of the course modification page is deep, so that the process of setting the operation course section is relatively abstract, the operation is not intuitive, and not easy for the user to learn and use. However, with the method provided in the present embodiment, the user may quite intuitively and conveniently set the operation route of the operation device at the target land plot, thereby reducing the learning and using cost of the user.

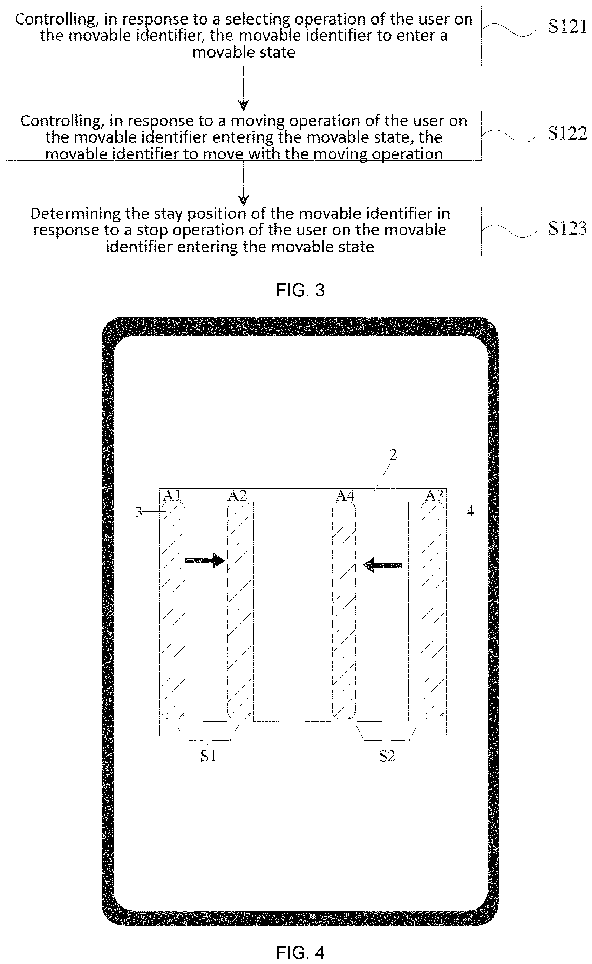

The process of dragging the movable identifier is exemplarily set forth below. As shown in FIG. 3, in the present embodiment, the above step S120 may include:
step S121, controlling, in response to a selecting operation of the user on the movable identifier, the movable identifier to enter a movable state;
step S122, controlling, in response to a moving operation of the user on the movable identifier entering the movable state, the movable identifier to move with the moving operation; and
step S123, determining the stay position of the movable identifier in response to a stop operation of the user on the movable identifier entering the movable state.

Optionally, the selecting operation may be, for example, a long press (for example, keeping a pressing state for more than a preset period of time) or double-clicking the movable identifier, the moving operation may be, for example, a press and moving the movable identifier, and the stop operation may be, for example, lift-off or double-clicking the movable identifier again. For example, as shown in FIG. 2, the user may select the movable identifier 4 by long pressing the movable identifier 4 with a finger 6, and the control device, when detecting the selecting operation of the user on the movable identifier, controls the movable identifier to enter the movable state, and may prompt the user, for example, by vibration, that the movable identifier has entered the movable state.

Subsequently, the finger 6 of the user keeps pressing the movable identifier 4 and moves left and right on the map, and the control device, when detecting that the finger 6 of the user presses the movable identifier and moves on the map, controls the movable identifier to move on the map with the movement of the finger 6 of the user. When the user moves the movable identifier to a specified position, the user may lift the finger 6, and the control device determines the stay position of the movable identifier according to the specified position when detecting that the finger 6 is lifted off the movable identifier. In this way, the drag operation may be performed on the movable identifier simply and conveniently, thus improving the operation efficiency of the user.

The movable identifier may be divided into a start identifier and an end identifier, and uses thereof may be identified by an intuitive text or pattern. In order to be more obvious and easier to operate, a larger or thicker identifier may be displayed, and an alignment line is displayed, so that the user more easily selects the course, i.e., the operation route, that needs to be operated from the planned route.

In the present embodiment, the control device may be provided with a plurality of positions to be segmented on the planned route, and in this case, the above step S123 may include:
step S1231, determining a stop position of the movable identifier corresponding to the stop operation;
step S1232, determining the stay position according to the position to be segmented closest to the stop position of the movable identifier; and
step S1233, controlling the movable identifier to move to the stay position.

For example, referring to FIG. 2, on the map of the display interface, the target land plot 2 may be, for example, a rectangular region, the planned route is a serpentine route covering the rectangular region, and the serpentine route may include a plurality of longitudinal routes and a plurality of transverse routes that are connected end to end in sequence. In the above, the plurality of longitudinal routes are arranged at intervals in parallel, each two adjacent longitudinal routes are connected through one transverse route, the plurality of longitudinal routes may have the same length, and the plurality of transverse routes may also have the same length.

In the above, positions of a start point and/or a terminal point (namely, at least one of the two endpoints) of each longitudinal route may be set as the position to be segmented. The movable identifier 3 and the movable identifier 4 may be elongated drag bars, and the shape of the drag bars may be, for example, rectangular or elliptical, and the length of the drag bars is substantially the same as or close to the length of the longitudinal route in the planned route, and the width of the drag bars is less than the width of the transverse route in the planned route.

It may be understood that the shape of the movable identifiers is merely an example, and is not limited to the rectangular shape or the elliptical shape, for example, a triangular shape, a circular shape, or a semi-circular shape further may be possible.

The respective initial positions of the movable identifier 3 and the movable identifier 4 may be respectively located at the boundary positions of the target land plot 2 on both left and right sides, the length direction is parallel to the longitudinal route, and the user may change the stay position thereof by dragging the movable identifier 3 or the movable identifier 4. For example, as shown in FIG. 2, the user may drag the movable identifier 4 to a position of the target land plot close to the middle.

When dragging the movable identifier, the user usually needs to drag the movable identifier to an accurate position, so as to accurately determine the operation route. However, in the process of the user dragging the movable identifier, it is difficult to drag the movable identifier to an accurate target position due to the presence of operation error or visual error. In order to solve the above problem, in the present embodiment, the control device may first determine the stop position of the movable identifier when the stop operation occurs in response to the stop operation of the user. Subsequently, the stay position is determined according to the position to be segmented closest to the stop position of the movable identifier.

For example, as the position to be segmented may be located at an endpoint position of the longitudinal route, after determining the stop position of the movable identifier, the control device may calculate a vertical distance between the endpoint of each longitudinal route and the stop position of the movable identifier, and determine a position of a longitudinal route, wherein the endpoint of the longitudinal route is an endpoint with the shortest vertical distance to the stop position of the movable identifier. The control device may determine a stay position of the movable identifier according to the position of the longitudinal route, so that when located at the stay position, the movable identifier at least partially overlaps the longitudinal route. Then, the control device may control the movable identifier to move to the stay position.

In this way, when performing the drag operation on the movable identifier, the user only needs to drag the movable identifier to a rough position, and the control device will automatically move the movable identifier to a desired accurate position (for example, the position where the longitudinal route is located), so as to reduce the operation difficulty of the user, and improve the operation efficiency of the user, moreover, the selected operation route may be more intuitively and clearly indicated on the map.

In the present embodiment, the control device may determine the operation route in multiple manners according to the positional relationship between the stay position and the planned route.

In an embodiment, the control device may be provided with a plurality of positions to be segmented on the planned route, and in this case, the step of determining the operation route from the planned route according to the positional relationship between the stay position and the planned route may include:
step S131, selecting a position to be segmented closest to the stay position as the segmented position, and segmenting the planned route according to the segmented position so as to determine the operation route.

For example, as shown in FIG. 2, one endpoint may be selected from each longitudinal route in the planned route as the position to be segmented. When the movable identifier is located at the stay position, the control device may determine the vertical distance between each position to be segmented and the movable identifier, and select a position to be segmented with the shortest vertical distance to the movable identifier as the segmented position, so as to segment the planned route, thereby generating a desired operation route.

In the above, in some cases, when the user just drags the movable identifier to a certain longitudinal route or the control device automatically moves the movable identifier to a certain longitudinal route, the movable identifier may overlap the position to be segmented on the longitudinal route, in this case, the position to be segmented overlapping the movable identifier may be considered closest to the stay position of the movable identifier, and the planned route is segmented by taking the position to be segmented as the segmented position.

In the present embodiment, one or two movable identifiers may be displayed on the map of the display interface.

In one example, referring to FIG. 2, only the movable identifier 3 or the movable identifier 4 may be displayed on the map. When only the movable identifier 3 is displayed on the map, the initial position of the movable identifier 3 may be located at a left boundary of the target land plot, and the user may perform the drag operation on the movable identifier 3, so as to change the stay position of the movable identifier 3, the control device may determine one segmented position according to the stay position of the movable identifier 3, and take a route located between the segmented position and the start point of the planned route in the planned route as the operation route.

Correspondingly, when only the movable identifier 4 is displayed on the map, the initial position of the movable identifier 4 may be located at a right boundary of the target land plot, and the user may perform the drag operation on the movable identifier 4, so as to change the stay position of the movable identifier 4, the control device may determine one segmented position according to the stay position of the movable identifier 4, and take a route located between the segmented position and the terminal point of the planned route in the planned route as the operation route.

In another example, the movable identifier 3 and the movable identifier 4 may be simultaneously displayed on the map, wherein the movable identifier 3 may be defined as a start point movable identifier, and the movable identifier 4 may be defined as a terminal point movable identifier. Correspondingly, when determining the operation route, two segmented positions may be determined on the planned route, i.e., a segmented start point position corresponding to the start point movable identifier and a segmented terminal point position corresponding to the terminal point movable identifier. In the above, the initial position of the movable identifier 3 may be located at the left boundary of the target land plot, and the initial position of the movable identifier 4 may be located at the right boundary of the target land plot. In use, the user may perform the drag operation on the movable identifier 3 and the movable identifier 4, respectively, so as to change the respective stay positions of the movable identifier 3 and the movable identifier 4, respectively, subsequently, the control device may determine one segmented start point position according to the stay position of the movable identifier 3, determine one segmented terminal point position according to the stay position of the movable identifier 4, and take the route 5 located between the segmented start point position and the segmented terminal point position in the planned route as the operation route. In this way, when setting the operation route, a selection range of the operation route is more flexible, facilitating performing more accurate crop protection operation.

It should be noted that different positions to be segmented may be set on the planned route corresponding to the movable identifier 3 and the movable identifier 4, respectively. For example, on the planned route, a start point position to be segmented may be set corresponding to the movable identifier 3, and a terminal point position to be segmented may be set corresponding to the movable identifier 4. In the above, an endpoint in the two endpoints of each longitudinal route having a shorter distance to the start point of the planned route may be set as the start point position to be segmented, and the endpoint having a shorter distance to the terminal point of the planned route may be set as the terminal point position to be segmented. In the above, the distance to the start point of the planned route or the distance to the terminal point of the planned route refers to the distance along the planned route. In use, the start point position to be segmented closest to the stay position of the movable identifier 3 may be taken as the segmented start point position, the terminal point position to be segmented closest to the stay position of the movable identifier 4 may be taken as the segmented terminal point position, and the route located between the segmented start point position and the segmented terminal point position in the planned route is taken as the operation route.

In another implementation of the present embodiment, the above step S130 may include:
step S132, determining a target route covered by a movement track of the drag operation of the movable identifier in the planned route according to the stay position of the movable identifier; and
step S133, segmenting the operation route from the planned route according to the target route.

Optionally, the initial position of the movable identifier may be determined in advance. For example, the initial position of the movable identifier 3 may be located at the left boundary of the target land plot, and the initial position of the movable identifier 4 may be located at the right boundary of the target land plot. After the user completes the drag operation on the movable identifier, the control device may determine the respective initial positions and stay positions of the movable identifiers 3 and 4, respectively. Exemplarily, referring to FIG. 4, it is assumed that the control device determines that the initial position of the movable identifier 3 is A1 and the stay position is A2, determines that the initial position of the movable identifier 4 is A3 and the stay position is A4, as the movable identifiers 3 and 4 are both long strips, the movement track defined by the initial position A1 and the stay position A2 of the movable identifier 3 is a region S1, and the movement track defined by the initial position A3 and the stay position A4 of the movable identifier 4 is a region S2. Regions S1 and S2 cover partial routes of the planned route, respectively, and the partial routes covered are the target route above.

Subsequently, the control device may set the route (i.e., the target route) covered by the movement track as the operation route or a route other than the target route in the planned route as the operation route according to the presetting.

For example, when only one movable identifier is displayed on the map, the route covered by the movement track of the movable identifier may be taken as the operation route; and when two movable identifiers are displayed on the map (for example, the movable identifier 3 and the movable identifier 4 in FIG. 2), a route other than the route covered by the movement track of the two movable identifiers in the planned route may be taken as the operation route.

In the present embodiment, the method for setting the operation route for the operation device may further include: displaying at least one of a position of the operation device, a position of a drug filling machine, a position of the control device including the display interface, and a position of an obstacle on the map.

In the above, the position of the operation device, the position of the drug filling machine, the position of the control device, and the position of the obstacle above may be measured in advance. By displaying the position of the operation device, the position of the drug filling machine, the position of the control device, and the position of the obstacle on the map, the user may more conveniently determine actual geographic positions corresponding to various sections of the planned route on the map, thereby facilitating the user in reasonably formulating the operation route. For example, in FIG. 2, the position of the operation device 1 is displayed on the map, so that when formulating the operation route, the user may refer to the position where the operation device is located, so as to more reasonably formulate the operation route.

In the present embodiment, the planned route is displayed within the boundary indicated by the boundary information, and when the movable identifier is located at the stay position, the movable identifier at least partially overlaps the planned route. In the above, in order to facilitate the user operation, optionally, a movement range of the movable identifier on the map may be limited to the boundary indicated by the boundary information of the target land plot. By displaying the planned route within the boundary of the target land plot, the user may more clearly determine the positional relationship between the planned route and the target land plot, thereby facilitating the user in formulating the operation route. Dragging the movable identifier within the area where the planned route is located to segment the planned route enables the operation process of the user to be more convenient and intuitive. In the above, after obtaining the operation route from the planned route, other routes in the planned route, except the operation route, may be no longer displayed.

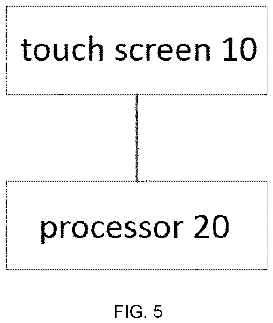

As shown in FIG. 5, an embodiment of the present disclosure further provides a control device for setting an operation route for an operation device, wherein the control device includes a touch screen 10 and a processor 20, and the touch screen 10 includes a display interface. The processor 20 is configured to: display a map on a display interface, and display target land plot information, a planned route for the target land plot, and a movable identifier on the map, wherein the target land plot information includes boundary information of the target land plot; change a stay position of the movable identifier in response to a drag operation of a user on the movable identifier; and determine the operation route from the planned route according to the stay position.

In this way, the user may directly set the operation route by dragging the movable identifier on the map displayed on the display interface, and the entire human-computer interaction process is intuitive and convenient, and easy for the user to learn and operate. Moreover, as the operation route may be directly set on the map, the user may take geographic information displayed on the map as a reference object for reference, so as to more clearly and accurately determine an actual geographic area corresponding to each route in the planned route, thereby facilitating the user in accurately setting the desired operation route for the operation device.

Optionally, the operation device may be, for example, a crop protection device (e.g., a drone, a driverless vehicle), and the target land plot may be a geographic area where the operation device needs to perform the crop protection operation, such as farmland or orchard. When the crop protection operation is required, the target land plot to be operated may be allocated for the operation device by a control device such as a handheld ground station or a mobile phone, and the operation route in which the operation device needs to perform the crop protection operation is set for the target land plot.

The control device may include the touch screen 10 and the processor 20, wherein the touch screen 10 may be a capacitive touch screen or a resistive touch screen, etc., and the processor 20 may be a single chip microcomputer, a chip, a microcontroller, a central processor, etc., and may have a certain graphics processing capability. The touch screen 10 may include a display interface, and the user may operate on the display interface by a hand or a stylus. The touch screen 10 can detect the operation of the user, convert the detected operation into an electrical signal, and transmit the electrical signal to the processor 20, and the processor 20 may perform corresponding processing according to the electrical signal indicating the operation of the user.

In the above, the processor 20 may display the map on the display interface, and may display the target land plot information on the map, wherein the target land plot information may include boundary information of the target land plot, and the boundary information indicates a position of boundary of the target land plot on the map. Exemplarily, the boundary information of the target land plot may be a bounding box. The planned route for the target land plot may be displayed within the boundary of the target land plot, and the planned route may be obtained by measuring the target land plot in real, for example, by a device having a positioning function, and when the operation device performs an operation according to the planned route, the crop protection operation for the whole target land plot generally can be completed. The planned route may be, for example, a serpentine route as shown in FIG. 2.

In use, the operation device may not need to perform the crop protection operation on the whole target land plot, and therefore it is necessary to determine the operation route that needs to perform the crop protection operation from the planned route of the target land plot. Therefore, in the present embodiment, the processor 20 further may display the movable identifier on the map, and the initial position of the movable identifier may be located at the boundary position of the target land plot displayed on the map. When the operation route needs to be set, the user may drag the movable identifier on the map, and the processor 20 may change the stay position of the movable identifier within the boundary in response to the drag operation of the user on the movable identifier, and determine the operation route from the planned route according to the positional relationship between the stay position and the planned route.

In the present embodiment, the step that the processor 20 changes the stay position of the movable identifier in response to the drag operation of the user on the movable identifier may include: controlling, in response to a selecting operation of the user on the movable identifier, the movable identifier to enter a movable state; controlling, in response to a moving operation of the user on the movable identifier entering the movable state, the movable identifier to move with the moving operation; and determining the stay position of the movable identifier in response to a stop operation of the user on the movable identifier entering the movable state.

Optionally, the selecting operation may be, for example, a long press or double-clicking the movable identifier, the moving operation may be, for example, a press and moving the movable identifier, and the stop operation may be, for example, lift-off or double-clicking the movable identifier again. For example, as shown in FIG. 2, the user may select the movable identifier 4 by long pressing the movable identifier 4 with the finger 6, and the processor 20, when detecting the selecting operation of the user on the movable identifier, controls the movable identifier to enter the movable state, and may prompt the user, for example, by vibration, that the movable identifier has entered the movable state. Subsequently, the finger 6 of the user keeps pressing the movable identifier 4 and moves left and right on the map, and the processor 20, when detecting that the finger 6 of the user presses the movable identifier and moves on the map, controls the movable identifier to move on the map with the movement of the finger 6 of the user. When the user moves the movable identifier to a specified position, the user may lift the finger 6, and the processor 20 determines the stay position of the movable identifier according to the specified position when detecting that the finger 6 is lifted off the movable identifier. In this way, the drag operation may be performed on the movable identifier simply and conveniently, thus improving the operation efficiency of the user.

In the present embodiment, the processor 20 may be provided with a plurality of positions to be segmented on the planned route, and in this case, the step that the processor 20 determines the stay position of the movable identifier in response to a stop operation of the user on the movable identifier entering the movable state may include: determining a stop position of the movable identifier corresponding to the stop operation; determining the stay position according to the position to be segmented closest to the stop position of the movable identifier; and controlling the movable identifier to move to the stay position.

Optionally, as shown in FIG. 2, on the map of the display interface, the target land plot 2 may be, for example, a rectangular region, the planned route is a serpentine route covering the rectangular region, and the serpentine route may include a plurality of longitudinal routes and a plurality of transverse routes that are connected end to end in sequence. In the above, the plurality of longitudinal routes are arranged at intervals in parallel, each two adjacent longitudinal routes are connected through one transverse route, the plurality of longitudinal routes may have the same length, and the plurality of transverse routes may also have the same length.

In the above, positions of a start point and/or a terminal point of each longitudinal route may be set as the positions to be segmented. The movable identifier 3 and the movable identifier 4 may be elongated drag bars, and the shape of the drag bars may be, for example, rectangular or elliptical, and the length of the drag bars is substantially the same as or close to the length of the longitudinal route in the planned route, and the width of the drag bars is less than the width of the transverse route in the planned route. It may be understood that the shape of the movable identifiers is not limited to the rectangular shape or the elliptical shape, but a triangular shape or a semi-circular shape etc. further may be possible.

The respective initial positions of the movable identifier 3 and the movable identifier 4 may be respectively located at the boundary positions of the target land plot 2 on both left and right sides, the length direction is parallel to the longitudinal route, and the user may change the stay position thereof by dragging the movable identifier 3 or the movable identifier 4. For example, as shown in FIG. 2, the user may drag the movable identifier 4 to a position of the target land plot close to the middle.

When dragging the movable identifier, the user usually needs to drag the movable identifier to an accurate position, so as to accurately determine the operation route. However, in the process of the user dragging the movable identifier, it is difficult to drag the movable identifier to an accurate target position due to the presence of operation error or visual error.

In order to solve the above problem, in the present embodiment, the processor 20 may first determine the stop position of the movable identifier when the stop operation occurs in response to the stop operation of the user. Subsequently, the processor 20 determines the stay position according to the position to be segmented closest to the stop position of the movable identifier.

For example, as the position to be segmented may be located at an endpoint position of the longitudinal route, after determining the stop position of the movable identifier, the processor 20 may calculate a vertical distance between the endpoint of each longitudinal route and the stop position of the movable identifier, and determine a position of a longitudinal route, wherein the endpoint of the longitudinal route is an endpoint with the shortest vertical distance to the stop position of the movable identifier. The processor 20 may determine the stay position of the movable identifier according to the position of the longitudinal route, so that when located at the stay position, the movable identifier at least partially overlaps the longitudinal route. Then, the processor 20 may control the movable identifier to move to the stay position.

In this way, when performing the drag operation on the movable identifier, the user only needs to drag the movable identifier to a rough position, and the processor 20 will automatically move the movable identifier to a desired accurate position (for example, the position where the longitudinal route is located), so as to reduce the operation difficulty of the user, and improve the operation efficiency of the user, moreover, the selected operation route may be more intuitively and clearly indicated on the map.

In the present embodiment, the processor 20 may determine the operation route from the planned route in multiple manners according to the positional relationship between the stay position and the planned route.

In an embodiment, the processor 20 may be provided with a plurality of positions to be segmented on the planned route, and in this case, the step that the processor 20 determines the operation route from the planned route according to the positional relationship between the stay position and the planned route may include: selecting a position to be segmented closest to the stay position as the segmented position, and segmenting the planned route according to the segmented position so as to determine the operation route.

For example, as shown in FIG. 2, one endpoint may be selected from each longitudinal route in the planned route as the position to be segmented. When the movable identifier is located at the stay position, the processor 20 may determine the vertical distance between each position to be segmented and the movable identifier, and select a position to be segmented with the shortest vertical distance to the movable identifier as the segmented position, so as to segment the planned route, thereby generating a desired operation route.

In the above, in some cases, when the user just drags the movable identifier to a certain longitudinal route or the processor 20 automatically moves the movable identifier to a certain longitudinal route, the movable identifier may overlap the position to be segmented on the longitudinal route, in this case, the position to be segmented overlapping the movable identifier may be considered closest to the stay position of the movable identifier, and the planned route is segmented by taking the position to be segmented as the segmented position.

In the present embodiment, one or two movable identifiers may be displayed on the map of the display interface.

In one example, referring to FIG. 2, only the movable identifier 3 or the movable identifier 4 may be displayed on the map. When only the movable identifier 3 is displayed on the map, the initial position of the movable identifier 3 may be located at a left boundary of the target land plot, and the user may perform the drag operation on the movable identifier 3, so as to change the stay position of the movable identifier 3, the processor 20 may determine one segmented position according to the stay position of the movable identifier 3, and take a route located between the segmented position and the start point of the planned route in the planned route as the operation route.

Correspondingly, when only the movable identifier 4 is displayed on the map, the initial position of the movable identifier 4 may be located at a right boundary of the target land plot, and the user may perform the drag operation on the movable identifier 4, so as to change the stay position of the movable identifier 4, the processor 20 may determine one segmented position according to the stay position of the movable identifier 4, and take a route located between the segmented position and the terminal point of the planned route in the planned route as the operation route.

In another example, the movable identifier 3 and the movable identifier 4 may be simultaneously displayed on the map, wherein the movable identifier 3 may be defined as a start point movable identifier, and the movable identifier 4 may be defined as a terminal point movable identifier. Correspondingly, when determining the operation route, two segmented positions may be determined on the planned route, i.e., a segmented start point position corresponding to the start point movable identifier and a segmented terminal point position corresponding to the terminal point movable identifier. In the above, the initial position of the movable identifier 3 may be located at the left boundary of the target land plot, and the initial position of the movable identifier 4 may be located at the right boundary of the target land plot.

In use, the user may perform the drag operation on the movable identifier 3 and the movable identifier 4, respectively, so as to change the respective stay positions of the movable identifier 3 and the movable identifier 4, respectively, subsequently, the processor 20 may determine one segmented start point position according to the stay position of the movable identifier 3, determine one segmented terminal point position according to the stay position of the movable identifier 4, and take the route 5 located between the segmented start point position and the segmented terminal point position in the planned route as the operation route. In this way, when setting the operation route, a selection range of the operation route is more flexible, facilitating performing more accurate crop protection operation.

It should be noted that different positions to be segmented may be set on the planned route corresponding to the movable identifier 3 and the movable identifier 4, respectively. For example, on the planned route, a start point position to be segmented may be set corresponding to the movable identifier 3, and a terminal point position to be segmented may be set corresponding to the movable identifier 4. In the above, an endpoint in the two endpoints of each longitudinal route having a shorter distance to the start point of the planned route may be set as the start point position to be segmented, and the endpoint having a shorter distance to the terminal point of the planned route may be set as the terminal point position to be segmented. In the above, the distance to the start point of the planned route or the distance to the terminal point of the planned route refers to the distance along the planned route. In use, the start point position to be segmented closest to the stay position of the movable identifier 3 may be taken as the segmented start point position, the terminal point position to be segmented closest to the stay position of the movable identifier 4 may be taken as the segmented terminal point position, and the route located between the segmented start point position and the segmented terminal point position in the planned route is taken as the operation route.

In another embodiment, the step that the processor 20 determines the operation route from the planned route according to the positional relationship between the stay position and the planned route may include: determining the target route covered by the movement track of drag operation in the planned route according to the stay position; and segmenting the operation route from the planned route according to the target route.

Optionally, the initial position of the movable identifier may be determined in advance. For example, the initial position of the movable identifier 3 may be located at the left boundary of the target land plot, and the initial position of the movable identifier 4 may be located at the right boundary of the target land plot. After the user completes the drag operation on the movable identifier, the processor 20 may determine the respective initial positions and the respective stay positions of the movable identifiers 3 and 4, respectively, and determine, in the process of dragging the movable identifier, the route covered by the movement track of the movable identifier in the planned route, and the route covered by the movement track is just the target route. In the above, relevant description about FIG. 4 in the preceding may be referred to for a detailed process of determining the target route, which is not repeated herein.

Subsequently, the processor 20 may set the target route covered by the movement track as the operation route or a route other than the route covered by the movement track in the planned route as the operation route according to the presetting.

For example, when only one movable identifier is displayed on the map, the processor 20 may take the route covered by the movement track of the movable identifier as the operation route; and when two movable identifiers are displayed on the map (for example, the movable identifier 3 and the movable identifier 4 in FIG. 2), the processor 20 may take a route other than the route covered by the movement track of the two movable identifiers in the planned route as the operation route, for example, determines the route uncovered by regions S1 and S2 shown in FIG. 4 in the planned route as the operation route.

In the present embodiment, the processor 20 further may be configured to display at least one of a position of the operation device, a position of a drug filling machine, a position of the control device including the display interface, and a position of an obstacle on the map. In the above, the position of the operation device, the position of the drug filling machine, the position of the control device, and the position of the obstacle above may be measured in advance. By displaying the position of the operation device, the position of the drug filling machine, the position of the control device, and the position of the obstacle on the map, the user may more conveniently determine actual geographic positions corresponding to various sections of the planned route on the map, thereby facilitating the user in reasonably formulating the operation route. For example, in FIG. 2, the position of the operation device 1 is displayed on the map, so that when the user formulates the operation route, the user may refer to the position where the operation device is located, so as to more reasonably formulate the operation route.

In the present embodiment, the processor 20 further may be configured to display the planned route within the boundary indicated by the boundary information, and when the movable identifier is located at the stay position, the movable identifier at least partially overlaps the planned route. In the above, in order to facilitate the user operation, in the present embodiment, a movement range of the movable identifier on the map may be limited to the boundary indicated by the boundary information of the target land plot. By displaying the planned route within the boundary of the target land plot, the user may more clearly determine the positional relationship between the planned route and the target land plot, thereby facilitating the user in formulating the operation route. Dragging the movable identifier within the area where the planned route is located to segment the planned route enables the operation process of the user to be more convenient and intuitive. In the above, after obtaining the operation route from the planned route, other routes in the planned route, except the operation route, may be no longer displayed.

The optional implementations of the present embodiment are described above in detail in conjunction with the accompanying drawings, while the present disclosure is not limited to specific details in the above embodiments, and within the scope of technical concept of the present disclosure, various simple variations may be made to the technical solutions of the present disclosure, and all of these simple variations belong to the scope of protection of the present disclosure.

In addition, it should be noted that various specific technical features described in the above embodiments may be combined in any suitable manner without conflict. In order to avoid unnecessary repetition, various possible combinations are not described separately in the present embodiment.

A person skilled in the art would understand that all or part of the steps of the method in the above embodiments might be implemented by relevant hardware instructed by a program, which program is stored in a storage medium, and includes several instructions for enabling a single chip microcomputer, a chip or a processor to perform all or part of the steps of the method described in the embodiments of the present disclosure. The preceding storage medium includes various media in which program codes can be stored, such as U disk, mobile hard disk, Read-Only Memory (ROM), Random Access Memory (RAM), diskette and compact disk.

In addition, various different embodiments of the present disclosure may also be combined arbitrarily, as long as they do not go against the idea of the present disclosure, and should also be regarded as the contents disclosed in the present disclosure.

### Industrial Applicability

The method and the control device for setting an operation route for an operation device provided in the embodiment of the present disclosure provide an intuitive and convenient manner of setting the operation route for the user, and reduce the learning and using cost of the user for setting the operation route.

## Claims

1. A method for setting an operation route for an operation device, **characterized in that** the method comprises:
displaying a map on a display interface, displaying information of a target land plot on the map, displaying a planned route for the target land plot on the map, and displaying a movable identifier on the map, wherein the information of the target land plot comprises boundary information of the target land plot;
changing a stay position of the movable identifier in response to a drag operation of a user on the movable identifier; and
determining the operation route from the planned route according to the stay position.

2. The method according to claim 1, wherein the changing a stay position of the movable identifier in response to a drag operation of a user on the movable identifier comprises:
controlling, in response to a selecting operation of the user on the movable identifier, the movable identifier to enter a movable state;
controlling, in response to a moving operation of the user on the movable identifier entering the movable state, the movable identifier to move with the moving operation; and
determining the stay position of the movable identifier in response to a stop operation of the user on the movable identifier entering the movable state.

3. The method according to claim 2, wherein the planned route is provided with a plurality of positions to be segmented, and the determining the stay position of the movable identifier in response to a stop operation of the user on the movable identifier entering the movable state comprises:
determining a stop position of the movable identifier corresponding to the stop operation;
determining the stay position according to a position to be segmented closest to the stop position of the movable identifier; and
controlling the movable identifier to move to the stay position.

4. The method according to any one of claims 1 to 3, wherein the determining the operation route from the planned route according to the stay position comprises:
determining the operation route from the planned route according to a positional relationship between the stay position and the planned route.

5. The method according to claim 4, wherein the planned route is provided with a plurality of positions to be segmented, and the determining the operation route from the planned route according to a positional relationship between the stay position and the planned route comprises:
selecting a position to be segmented closest to the stay position as a segmented position, and segmenting the planned route according to the segmented position so as to determine the operation route.

6. The method according to claim 5, wherein the segmenting the planned route according to the segmented position so as to determine the operation route comprises:
taking a route between the segmented position and a start point of the planned route as the operation route; or
taking a route between the segmented position and a terminal point of the planned route as the operation route.

7. The method according to claim 5, wherein the movable identifier comprises a start point movable identifier and a terminal point movable identifier, the segmented position comprises a segmented start point position and a segmented terminal point position; and the segmenting the planned route according to the segmented position so as to determine the operation route comprises:
determining the segmented start point position according to a stay position of the start point movable identifier;
determining the segmented terminal point position according to a stay position of the terminal point movable identifier; and
taking a route located between the segmented start point position and the segmented terminal point position, in the planned route, as the operation route.

8. The method according to claim 7, wherein each of the positions to be segmented comprises a start point position to be segmented corresponding to the start point movable identifier and a terminal point position to be segmented corresponding to the terminal point movable identifier;
the determining the segmented start point position according to a stay position of the start point movable identifier comprises: determining the segmented start point position from the start point position to be segmented according to the stay position of the start point movable identifier; and
the determining the segmented terminal point position according to a stay position of the terminal point movable identifier comprises: determining the segmented terminal point position from the terminal point position to be segmented according to the stay position of the terminal point movable identifier.

9. The method according to claim 4, wherein the determining the operation route from the planned route according to a positional relationship between the stay position and the planned route comprises:
determining a target route covered by a movement track of the drag operation in the planned route according to the stay position; and
segmenting the operation route from the planned route according to the target route.

10. The method according to any one of claims 1 to 9, wherein the method further comprises:
displaying, on the map, at least one of a position of the operation device, a position of a drug filling machine, a position of a control device comprising the display interface and a position of an obstacle.

11. The method according to any one of claims 1 to 10, wherein the method further comprises:
displaying the planned route within a boundary indicated by the boundary information, wherein when the movable identifier is located at the stay position, the movable identifier at least partially overlaps the planned route.

12. A control device for setting an operation route for an operation device, **characterized in that** the control device comprises a touch screen and a processor, wherein the touch screen comprises a display interface, and the processor is configured to:
display a map on the display interface, display information of a target land plot on the map, display a planned route for the target land plot on the map, and display a movable identifier on the map, wherein the information of the target land plot comprises boundary information of the target land plot;
change a stay position of the movable identifier in response to a drag operation of a user on the movable identifier; and
determine the operation route from the planned route according to the stay position.

13. The control device according to claim 12, wherein the processor changes the stay position of the movable identifier in response to the drag operation of the user on the movable identifier, comprising:
controlling, in response to a selecting operation of the user on the movable identifier, the movable identifier to enter a movable state;
controlling, in response to a moving operation of the user on the movable identifier entering the movable state, the movable identifier to move with the moving operation; and
determining the stay position of the movable identifier in response to a stop operation of the user on the movable identifier entering the movable state.

14. The control device according to claim 13, wherein the planned route is provided with a plurality of positions to be segmented; and the processor determines the stay position of the movable identifier in response to the stop operation of the user on the movable identifier entering the movable state, comprising:
determining a stop position of the movable identifier corresponding to the stop operation;
determining the stay position according to a position to be segmented closest to the stop position of the movable identifier; and
controlling the movable identifier to move to the stay position.

15. The control device according to any one of claims 12 to 14, wherein the processor is further configured to determine the operation route from the planned route according to a positional relationship between the stay position and the planned route.

16. The control device according to claim 15, wherein the planned route is provided with a plurality of positions to be segmented; and the processor determines the operation route from the planned route according to the positional relationship between the stay position and the planned route, comprising:
selecting a position to be segmented closest to the stay position as a segmented position, and segmenting the planned route according to the segmented position so as to determine the operation route.

17. The control device according to claim 16, wherein the processor segments the planned route according to the segmented position so as to determine the operation route, comprising:
taking a route between the segmented position and a start point of the planned route as the operation route; or
taking a route between the segmented position and a terminal point of the planned route as the operation route.

18. The control device according to claim 16, wherein the movable identifier comprises a start point movable identifier and a terminal point movable identifier, the segmented position comprises a segmented start point position and a segmented terminal point position; and the processor segments the planned route according to the segmented position so as to determine the operation route, comprising:
determining the segmented start point position according to a stay position of the start point movable identifier;
determining the segmented terminal point position according to a stay position of the terminal point movable identifier; and
taking a route located between the segmented start point position and the segmented terminal point position, in the planned route, as the operation route.

19. The control device according to claim 18, wherein the position to be segmented comprises a start point position to be segmented corresponding to the start point movable identifier and a terminal point position to be segmented corresponding to the terminal point movable identifier;
the processor determines the segmented start point position according to the stay position of the start point movable identifier, comprising: determining the segmented start point position from the start point position to be segmented according to the stay position of the start point movable identifier; and
the processor determines the segmented terminal point position according to the stay position of the terminal point movable identifier, comprising: determining the segmented terminal point position from the terminal point position to be segmented according to the stay position of the terminal point movable identifier.

20. The control device according to claim 15, wherein the processor determines the operation route from the planned route according to the positional relationship between the stay position and the planned route, comprising:
determining a target route covered by a movement track of the drag operation in the planned route according to the stay position; and
segmenting the operation route from the planned route according to the target route.

21. The control device according to any one of claims 12 to 20, wherein the processor is further configured to:
display, on the map, at least one of a position of the operation device, a position of a drug filling machine, a position of the control device comprising the display interface and a position of an obstacle.

22. The control device according to any one of claims 12 to 21, wherein the processor is further configured to:
display the planned route within a boundary indicated by the boundary information, wherein when the movable identifier is located at the stay position, the movable identifier at least partially overlaps the planned route.
